# EUROPÄISCHE PATENTSCHRIFT

(11) **EP 0 960 857 B1**
(45) Veröffentlichungstag und Bekanntmachung des Hinweises auf die Patenterteilung: **12.09.2001**
(21) Anmeldenummer: 99108488.0
(22) Anmeldetag: 30.04.1999
(51) Int. Cl.: C01G 19/00, C01G 1/12

(54) **Verfahren zur thermischen Herstellung von Zinn(IV)sulfiden**
Process for the thermal preparation of stannic sulfides
Procédé pour la préparation thermique de sulfures stanniques

(30) Priorität: 13.05.1998 DE 19821312
(43) Veröffentlichungstag der Anmeldung: 01.12.1999
(73) Patentinhaber: Goldschmidt AG, 45127 Essen (DE)
(72) Erfinder: Guhl, Dieter Dr., 67346 Speyer (DE); von Drach, Volker Dr., 82402 Seeshaupt (DE)

(56) Entgegenhaltungen:
- US-A- 2 585 161
- US-A- 4 681 777

## Beschreibung

Die Erfindung betrifft ein Verfahren zur Herstellung von Zinn (IV) sulfiden durch thermische Umsetzung von Zinn (II) verbindungen und Schwefel unter Normaldruck.

Zinn(IV)sulfid ist eine seit langem bekannte Verbindung, die sowohl natürlich als Mineral vorkommt als auch synthetisch hergestellt wird. Unter der Bezeichnung Musivgold wird es als Pigment in Zinnbronzen eingesetzt.

Ferner gewinnen Zinnsulfide in neuerer Zeit Bedeutung als Schmiermittel. So lehrt beispielsweise die EP-A-0 654 616, daß Zinnsulfide bei der Herstellung von Bremsbelägen vorteilhaft eingesetzt werden können. Die Natur der Zinnsulfide wird allerdings nicht näher spezifiziert.

Ziel der vorliegenden Erfindung ist es, ein wirtschaftliches Verfahren zur Gewinnung von Zinn(IV)sulfid in hoher Reinheit zu entwickeln.

Zinn(IV)sulfid läßt sich prinzipiell nach zwei Methoden herstellen: a) thermisch aus den Elementen und b) naßchemisch durch Fällung eines Zinnsalzes mit einer Sulfidquelle.

Bekannt ist, daß man durch einfaches Zusammenschmelzen von Zinn und Schwefel nicht zu reinem SnS₂ gelangen kann. Selbst das Erhitzen in evakuierten Druckgefäßen bei ca. 950 °C über längere Zeit führt nicht zu reinen Produkten.

Bekannt ist ferner (siehe Gmelin "Handbuch der Anorganischen Chemie", 8. Auflage, Zinn, Teil C2, Springer Verlag, 1975, S. 39 ff.), daß man durch Umsetzung von Zinn (II) chlorid mit elementarem Schwefel und Ammoniumchlorid unter einem definierten Temperaturregime und anschließender Nachbehandlung der Reaktionsmasse mit elementarem Schwefel bei 500 °C zu Zinn(IV)sulfid gelangt. Ein ähnliches Verfahren beschreiben Liu und Jiang, Huaxe Shije 1994, 35, 406 bis 408 (CAS 123:115447).

Die EP-A-0 806 396 lehrt, daß man zur Herstellung von Metalldisulfiden der allgemeinen Formel (SnₓMe₁₋ₓ)S₂ vorteilhafterweise eine Mischung von Metallen, vorwiegend auf Basis Zinn, mit einer überstöchiometrischen Menge an Schwefel in Gegenwart von Halogenidverbindungen, inbesondere in Gegenwart von Ammoniumchlorid oder Zinn(II)chloriden, verwendet.

Charakteristisch für diese Verfahren ist es, daß sie zwar von wohlfeilen Rohstoffen ausgehen, jedoch einen hohen Aufwand für die Synthese erfordern. Durch die notwendigen Reaktionstemperaturen ergeben sich technische Probleme, die durch die Flüchtigkeit des Schwefels und - bei Einsatz von Chloridverbindungen - des Ammoniumchlorides und ggf. des Zinn (IV) chlorides hervorgerufen werden.

Nachteilig an diesen Verfahren ist insbesondere, daß bei der Umsetzung erhebliche Mengen an Abgasen freigesetzt werden. So muß zur Erzielung von ausreichenden Reinheiten das gesamte eingesetzte Ammoniumchlorid ausgetrieben werden. Ferner gibt es Verluste an Schwefel, die in Form von Schwefeldioxid entweichen. Hinzu kommt das Chlorid aus dem Zinnrohstoff, welches vermutlich in Form von Chlorwasserstoff oder als Zinn (IV) - chlorid entweicht.

Die Absorption dieser Reststoffe aus dem Abgasstrom ist möglich, verursacht aber den Anfall von Abfallstoffen, die in der Regel nicht wieder verwertet werden können, da es sich um Salzmischungen handelt. Die Isolierung der Einzelkomponenten aus den Abgasströmen erfordert hohen apparativen Aufwand und ist damit sehr teuer.

Bei den naßchemischen Verfahren zur Herstellung von SnS₂ wird in der Regel ein wasserlösliches Zinnsalz mit einer Sulfidquelle umgesetzt, das ausgefällte Produkt wird von den Fremdsalzen befreit und getrocknet, z. B.
- Umsetzung einer salzsauren Lösung von SnCl₂ mit schwefliger Säure, wobei als Nebenprodukte SnS und elementarer Schwefel anfallen;
- Einleitung von Schwefelwasserstoff in eine schwach saure Zinn(IV)chlorid-Lösung. Als Produkte fallen amorphe Miederschläge an.

Für die technische Realisierung ist die mangelnde Verfügbarkeit von H₂S und dessen Toxizität ein großes Hindernis.

Wie beschrieben sind die bisher bekannten Methoden zur Herstellung von SnS₂ mit zahlreichen Nachteilen behaftet, die eine technische Realisierung als schwierig erscheinen lassen.

Die Aufgabenstellung der vorliegenden Erfindung ist es, ein Verfahren zu finden, welches es ermöglicht, SnS₂ in hoher Reinheit zu erhalten. Gleichzeitig sollen nur geringe Mengen Abgas bzw. Abgase in einer leicht wiederverwertbaren Form anfallen.

Nach dem Stand der Technik ist bekannt, daß nur bestimmte Zinn (II) verbindungen als Zinnquelle für die Umsetzung mit Schwefel zum SnS₂ in Frage kommen. Es handelt sich zum einen um Zinn (II) chlorid und zum anderen um Zinn(II)sulfid. Zinn(II)oxid hingegen reagiert mit Schwefel nur in Spuren zum Zinn (IV) sulfid. Über andere Zinn (II) verbindungen ist nichts bekannt.

Eine weitere Aufgabe der vorliegenden Erfindung ist daher, auch andere, leicht zugängliche Zinn(II)verbindungen als Rohstoffe für eine thermische Umsetzung mit Schwefel zum SnS₂ zur Verfügung zu stellen.

Überraschenderweise wurde gefunden, daß Zinn(II)verbindungen, welche in großen Mengen technisch verfügbar sind, brauchbare Ausgangssubstanzen für die Synthese darstellen.

So wurde gefunden, daß als Ausgangsverbindung Zinn(II)sulfat geeignet ist.

Gegenstand der Erfindung ist ein Verfahren zur Herstellung von SnS₂, welches dadurch gekennzeichnet ist, daß man SnSO₄ oder Zinn(II)carboxylate mit Schwefel unter Normalatmosphäre oder unter Schutzgas ohne Zusatz halogenidhaltiger Substanzen umsetzt.

Kristallines Zinn(II)sulfat wird mit Schwefelpulver, welches bevorzugt im Überschuß zwischen 5 bis 20 % eingesetzt wird, gemischt und anschließend bei Atmosphärendruck im Tiegel bei Temperaturen zwischen 350 und 650 °C, bevorzugt zwischen 400 und 500 °C, calciniert. Das resultierende SnS₂ ist ein feines, homogenes, gelb-oranges Pulver.

Bei Reaktionstemperaturen im Bereich zwischen 350 und 450 °C erhält man ebenfalls ein homogenes Produkt, welches aber noch Restmengen nichtumgesetzten Schwefels enthalten kann. Oberhalb von 650 °C kommt es auch bei kurzen Reaktionszeiten zur Zersetzung des Produktes. Man erhält ein Gemisch aus schwarzen, grauen Substanzen neben Zinn (IV) sulfid.

Als gasförmiges Nebenprodukt fällt nur Schwefeldioxid an, welches leicht zu absorbieren ist.

Ferner wurde gefunden, daß Zinn(II)carboxylate ebenfalls als Rohstoffe geeignet sind. Bevorzugt sind insbesondere Zinn(II)carboxylate, die folgende Eigenschaften aufweisen:
fester Aggregatszustand,
rückstandsfrei zersetzbare Mono-, Di- oder Polycarbonsäure.

Bevorzugt sind dabei Salze von Carbonsäuren mit bis zu 6 C-Atomen.

Bevorzugt setzt man als Zinn (II) carboxylate dabei Zinn(II)formiat oder Zinn(II)oxalat ein.

Setzt man beispielsweise eine Mischung aus Zinn(II)formiat mit Schwefel bei 450 bis 750 °C in normaler Atmosphäre oder_unter Schutzgas im Tiegel um, erhält man ein homogenes, feines, goldgelbes Zinn(IV)sulfid-Pulver.

Als Bestandteile des Abgasstromes konnten Kohlendioxid, Schwefeldioxid und Wasserdampf festgestellt werden.

Wird eine Mischung aus Zinn(II)oxalat mit Schwefel bei 450 bis 750 °C, bevorzugt bei 600 bis 700 °C, calciniert, fällt ebenfalls ein homogenes, goldgelbes SnS₂-Pulver an. Die Reaktionszeit beträgt zwischen 15 und 90 Minuten, bevorzugt etwa 20 bis 45 Minuten. Als Bestandteile des Abgases konnten Kohlendioxid und Schwefeldioxid nachgewiesen werden.

Die so hergestellten Zinn(IV)sulfide sind für tribochemische Zwecke gut geeignet.

Die gefundenen Ergebnisse sind insofern überraschend, als nach dem Stand der Technik nicht davon ausgegangen werden konnte, daß ohne die Anwesenheit von chloridhaltigen Substanzen, sei es Ammoniumchlorid, sei es ein Zinnchlorid, reine, homogene Zinn(IV)sulfide zugänglich sind. Vorteilhaft ist insbesondere, daß Abgase anfallen, die nicht mit chloridhaltigen Substanzen verunreinigt sind und insofern die Möglichkeit einer weiteren Verwendung eröffnen. Eine Absorption des entstehenden Schwefeldioxides bei einer Reaktion unter Normalatmosphäre ist leicht möglich. Mit alkalihaltigen Waschlösungen enstehen Alkalisulfite, für die es zahlreiche Anwendungen gibt.

Die folgenden Beispiele erläutern die Erfindung näher.

### Beispiel 1

107 g kristallines SnSO₄ werden in einer Reibschale innig mit 35,2 g Schwefel vermischt und in einen Tiegel gefüllt. Das Gemenge wird bei 450 °C in einem Ofen für 35 Minunten calciniert.

Als Reaktionsprodukt erhält man 110,2 g eines homogenen, goldgelben Gemisches aus SnS₂ und Schwefel.
- Analyse:: Sn-Gehalt: 63 %

### Beispiel 2

104 g Zinn (II) formiat werden in einer Reibschale innig mit 39 g Schwefel vermischt. In einem Tiegel wird das Gemenge bei 600 °C 32 Minuten unter Normalatmoschäre calciniert.

Man erhält 91,1 g eines goldgelben, homogenen Zinn(IV)sulfides.
- Analyse:: Sn-Gehalt: 66,4 %

### Beispiel 3

206 g Zinn(II)oxalat werden in einer Reibschale innig mit 72 g Schwefel vermischt. Das Gemenge wird in einem Tiegel bei 600 °C 32 Minuten unter Normalatmosphäre calciniert.

Man erhält 176,3 g eines lockeren goldgelben, homogenen SnS₂-Pulvers.
- Analyse:: Sn-Gehalt: 65,8 %

### Beispiel 4

103 g Zinn(II)oxalat werden mit 36 g Schwefel in einer Reibschale vermischt und in einem Tiegel bei 700 °C 37 Minuten unter Normalatmosphäre calciniert.

Man isoliert 84,5 g eines goldgelben, homogenen SnS₂-Pulvers.
- Analyse:: Sn-Gehalt: 65,4 %

### Beispiel 5

103 g SnC₂O₄ werden mit 36 g Schwefel vermischt. Die Calciniertemperatur beträgt 500 °C, die Reaktionsdauer 40 Minuten.

Man erhält 86,8 g SnS₂ von goldgelber Farbe und homogener Konsistenz.
- Analyse:: Sn-Gehalt: 66,2 %

## Patentansprüche

1. Verfahren zur Herstellung von SnS₂, **dadurch gekennzeichnet, daß** man SnSO₄ oder Zinn(II)carboxylate mit Schwefel unter Normalatmosphäre oder unter Schutzgas ohne Zusatz halogenidhaltiger Substanzen umsetzt.

2. Verfahren gemäß Anspruch 1, **dadurch gekennzeichnet, daß** man als Zinn (II) carboxylate Zinn (II) formiat oder Zinn(II)oxalat einsetzt.

## Claims

1. Process for the preparation of SnS₂, **characterized in that** SnSO₄ or tin(II) carboxylates are reacted with sulphur under a standard atmosphere or under protective gas without addition of halide-containing substances.

2. Process according to Claim 1, **characterized in that**, as tin(II) carboxylates, use is made of tin(II) formate or tin(II) oxalate.

## Revendications

1. Procédé pour la préparation de SnS₂, **caractérisé en ce qu'**on transforme du SnSO₄ ou du carboxylate d'étain (II) avec du soufre sous atmosphère normale ou sous gaz de protection sans addition de substances contenant des halogénures.

2. Procédé selon la revendication 1, **caractérisé en ce qu'**on utilise comme carboxylate d'étain (II) du formiate d'étain (II) ou de l'oxalate d'étain (II).
